Europäisches Patentamt

European Patent Office

Office européen des brevets

(11) Veröffentlichungsnummer: **0 361 160**
**A2**

(12) **EUROPÄISCHE PATENTANMELDUNG**

(21) Anmeldenummer: 89116476.6

(22) Anmeldetag: 06.09.89

(51) Int. Cl.5 **G02B 6/42 , G02B 6/12**

(30) Priorität: 29.09.88 DE 3833113

(43) Veröffentlichungstag der Anmeldung:
04.04.90 Patentblatt 90/14

(84) Benannte Vertragsstaaten:
**DE FR GB IT NL**

(71) Anmelder: **Siemens Aktiengesellschaft**
**Wittelsbacherplatz 2**
**D-8000 München 2(DE)**

(72) Erfinder: **Nolting, Hans-Peter, Dr.**
**Ringslebenstrasse 68**
**D-1000 Berlin 47(DE)**

(54) **Anordnung zur Herstellung einer Kopplung zwischen einem optischen Schichtwellenleiter und einem optischen Absorber.**

(57) Eine Kopplung zwischen einem Schichtwellenleiter und einer Schicht aus lichtabsorbierendem Material eines optischen Detektors ist für die monolithische Integration gut geeignet. Allerdings ist der leckwellenstrukturbedingte effektive Absorptionskoeffizient $\alpha_{eff}$ im Vergleich zum allein materialbedingten Absorptionskoeffizienten $\alpha_{Bulk}$ sehr klein. Es soll daher eine derartige Koppelanordnung mit einem höheren effektiven Absorptionskoeffizienten $\alpha_{eff}$ angegeben werden.

Dazu wird eine an den Schichtwellenleiter (1) leckwellengekoppelte Schicht (2) aus lichtabsorbierendem Material verwendet, die aus einer aus dünneren Schichten (21, 22, 23, ..., 2n-2, 2n-1, 2n) gebildeten Schichtefolge besteht, die wenigstens eine dünnere Schicht (21, 23, ..., 2n-2) aus transparentem Material und wenigstens eine dünnere Schicht (22, ..., 2n-2, 2n) aus lichtabsorbierendem Material aufweist.

Anwendung bei Optical Electronic Integrated Circuits (OEIC's)

EP 0 361 160 A2

## Anordnung zur Herstellung einer Kopplung zwischen einem optischen Schichtwellenleiter und einem optischen Absorber

Die Erfindung betrifft eine Anordnung zur Herstellung einer Kopplung zwischen einem Schichtwellenleiter und einem optischen Absorber nach dem Oberbegriff des Patentanspruchs 1.

Für zukünftige, optisch-elektronische integrierte Schaltkreise (OEIC's, Optical Electronic Integrated Circuits), bei denen optische Wellenleiter und optoelektronische Detektoren integriert sind, stellt die Kopplung zwischen Wellenleiter und Detektor eine zentrale Frage der monolithischen Integration dar. Für breitbandige Anwendungen in der optischen Nachrichtentechnik werden zur Kleinhaltung der Bauelementelänge und damit der Detektorkapazität hohe Lichtabsorptionskoeffizienten benötigt.

Es können generell zwei bekannte Anordnungen zur Kopplung eines Wellenleiters an einen optischen Detektor unterschieden werden:

Bei einer Anordnung endet der Wellenleiter abrupt vor dem Detektorgebiet und die optische Welle wird sehr effektiv mit einem durch diese Struktur bedingten effektiven Absorptionskoeffizienten $\alpha_{eff}$ in der Größenordnung eines maximal erreichbaren, allein durch das verwendete lichtabsorbierende Material bedingten Lichtabsorptionskoeffizienten $\alpha_{Bulk}$ absorbiert. Dies ist die übliche Anordnung bei der Verkopplung eines Lichtwellenleiters mit einem diskreten Detektor.

Bei der monolithischen Integration führt diese eine Koppelanordnung aber zu schwierigen technologischen Prozessen, z.B. zu selektiver Epitaxie zum Auffüllen einer geätzten Detektorgrube.

Die andere bekannte Anordnung ist entsprechend der eingangs genannten Art aufgebaut, wobei die Lichtwelle in einer Schichtanordnung absorbiert wird, bei welcher der passive Schichtwellenleiter und die Schicht aus lichtabsorbierendem Material des Detektors übereinander angeordnet sind. Diese Art der Kopplung ist als Leckwellenkopplung bekannt und für die monolithische Integration gut geeignet.

Allerdings hat es sich gezeigt, daß bei Leckwellenkopplung der durch die Leckwellenstruktur bedingte effektive Absorptionskoeffizient $\alpha_{eff}$ im Vergleich zum allein materialbedingten Absorptionskoeffizienten $\alpha_{Bulk}$ sehr klein ist. Beispielsweise haben experimentelle Untersuchungen im Materialsystem InGaAsP/InP (siehe dazu Electronics Letters, Vol. 23, No. 1 (1987) S. 2-4 und J. of. Lightwave Techn., Vol. 6, No. 3 (1988), S. 399-412) und Berechnungen (siehe dazu Electronics Letters, Vol. 23, No. 17 (1987) S. 895-897) gezeigt, daß bei der Leckwellenkopplung der effektive Absorptionskoeffizient $\alpha_{eff}$ in der Größenordnung von 200 cm$^{-1}$ liegt, während bei dem zugrunde gelegten absorbierenden Material der Absorptionskoeffizient $\alpha_{Bulk}$ einen Wert von 15000 cm$^{-1}$ hat.

Aufgabe der Erfindung ist es, eine für die monolithische Integration geeignete Anordnung der eingangs genannten Art mit einem höheren effektiven Absorptionskoeffizienten $\alpha_{eff}$ anzugeben.

Diese Aufgabe wird durch die im kennzeichnenden Teil des Patentanspruchs 1 angegebenen Merkmale gelöst.

Die erfindungsgemäße Lösung beruht auf der neuen Erkenntnis, daß es bei der Leckwellenkopplung eine Verdrängung des elektromagnetischen Feldes der Lichtwelle aus der Schicht aus lichtabsorbierendem Material in den verlustlosen Schichtwellenleiter hinein und eine Abhängigkeit des effektiven Absorptionskoeffizienten $\alpha_{eff}$ von dem Absorptionskoeffizienten $\alpha_{Bulk}$ gibt, nach der ein kleinerer Absorptionskoeffizient $\alpha_{Bulk}$ einen größeren effektiven Absorptionskoeffizienten $\alpha_{eff}$ zu Folge hat. Der Wert von $\alpha_{Bulk}$ kann als Naturkonstante bei vorgegebenem lichtabsorbierenden Material nicht ohne weiteres erniedrigt werden. Durch die erfindungsgemäße Anordnung wird erreicht, daß bei vorgegebenem lichtabsorbierenden Material die dieses Material aufweisende Schicht so wirkt als bestehe sie aus einem anderen lichtabsorbierenden Material, dessen Absorptionskoeffizient $\alpha_{Bulk}$ einen vergleichsweise kleineren Wert hat. Dadurch wird aufgrund der genannten Abhängigkeit ein höherer effektiver Absorptionskoeffizient $\alpha_{eff}$ erreicht und eine Feldverdrängung verhindert.

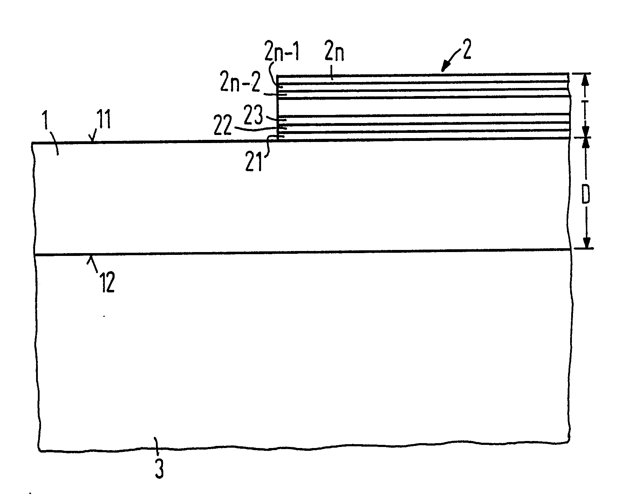

Die Erfindung wird in der nachfolgenden Beschreibung anhand der Figur beispielhaft näher erläutert.

Die Figur zeigt in schematischer Darstellung einen Schnitt durch ein Ausführungsbeispiel der erfindungsgemäßen Anordnung.

Bei dem dargestellten Ausführungsbeispiel ist der Schichtwellenleiter 1 an seiner Unterseite 12 auf einem festen Substrat 3 aufgebracht. An seine Oberseite 11 grenzt Luft oder ein Oxid. Der Schichtwellenleiter 1 ist damit ein asymmetrischer Schichtwellenleiter, was bedeutet, daß die beiden Materialien, die auf beiden Seiten 11 und 12 angrenzen, voneinander verschieden sind. Sind diese Materialien gleich, liegt ein symmetrischer Schichtwellenleiter vor, der ebenfalls verwendet werden kann.

Auf der Oberseite 11 des Schichtwellenleiters 1 ist die Schicht 2 aus lichtabsorbierendem Material aufgebracht, die aus einer Schichtenfolge aus dünneren Schichten 21, 22, 23, ..., 2n-2, 2n-1, 2n besteht, die beispielsweise abwechselnd aus transparentem Material und aus lichtabsorbierendem Material bestehen. n bedeutet eine ganze Zahl, die prinzipiell nach oben nicht und allenfalls technologisch beschränkt ist.

Das Substrat 3 besteht aus n-dotiertem InP, der passive Schichtwellenleiter 1 aus n-dotiertem quaternärem Material mit einer Bandkante $\lambda_Q$ von 0,92 $\mu$m bis 1,3 $\mu$m, vorzugsweise von 0,97 $\mu$m, eine dünnere Schicht aus transparentem Material aus n-dotiertem InP und eine dünnere Schicht aus lichtabsorbieren dem Material aus n-dotiertem ternärem Material, beispielsweise InGaAs. Die Dicke D des Schichtwellenleiters 1 beträgt 1,2 $\mu$m und die Dicke T der aus dieser Schichtenfolge aus beispielsweise vier dünneren Schichten aus InP und vier dünneren Schichten aus ternärem Material in abwechselnder Anordnung bestehenden Schicht 2 ist 0,18 $\mu$m. Bei einer Lichtwellenlänge $\lambda$ = 1,3 $\mu$m kann für das ternäre Material für den Absorptionskoeffizienten $\alpha_{Bulk}$ ein Wert von 15000 cm$^{-1}$ und eine Brechzahl von 3,58, für das quaternäre Material eine Brechzahl von 3,233 und für das InP eine Brechzahl von 3,2 angenommen werden.

Der unter diesen Bedingungen erzielbare optimale Wert des effektiven Absorptionskoeffizienten $\alpha_{eff}$ beträgt 1600 cm$^{-1}$ bei einem Koppelkoeffizienten von 0,9 für die Summe der Moden, wobei die Schicht 2 so wirkt, als sei sie homogen aus einem Material mit einem Absorptionskoeffizienten $\alpha_{Bulk}$ von etwa 11000 cm$^{-1}$ aufgebaut.

Bei Ausnutzung aller wählbaren Paramter (Schichtdicken T und D sowie Absorptionskoeffizient $\alpha_{Bulk}$) kann bei der erfindungsgemäßen Anordnung gegenüber einer herkömmlichen Anordnung der eingangs genannten Art mit einer lichtabsorbierenden Schicht aus ternärem Material allein und einer Schichtdicke T > 1,5 $\mu$m, bei der ein optimaler Sättigungswert des effektiven Absorptionskoeffizienten $\alpha_{eff}$ dieser Anordnung liegt, ein leckwellenbedingter effektiver Absorptionskoeffizient $\alpha_{eff}$ erzielt werden, der um einen Faktor 8 bis 10 größer ist.

## Ansprüche

1. Anordnung zur Herstellung einer Kopplung zwischen einem insbesondere passiven optischen Schichtwellenleiter (1) und einem eine Schicht (2) aus lichtabsorbierendem Material aufweisenden optischen Absorber, insbesondere eines optischen Detektors, wobei die Schicht (2) durch Leckwellenkopplung an den Schichtwellenleiter (1) gekoppelt ist, **dadurch gekennzeichnet,** daß die Schicht (2) aus einer aus dünneren Schichten (21, 22, 23, ..., 2n-2, 2n-1, 2n) gebildeten Schichtenfolge besteht, die wenigstens eine aus transparentem Material (21, 23, ..., 2n-1) und wenigstens eine aus lichtabsorbierendem Material (22, ..., 2n-2, 2n) bestehende dünnere Schicht aufweist.

2. Anordnung nach Anspruch 1, **dadurch gekennzeichnet,** daß die dünneren Schichten (21, 22, 23, ..., 2n-2, 2n-1, 2n) aus transparentem und lichtabsorbierendem Material periodisch in der Schichtenfolge angeordnet sind.

3. Anordnung nach Anspruch 1 oder 2, **dadurch gekennzeichnet,** daß das lichtabsorbierende Material einer dünneren Schicht (22, ..., 2n-2, 2n) aus ternärem Material besteht.

4. Anordnung nach Anspruch 3, **dadurch gekennzeichnet,** daß das ternäre Material aus InGaAs besteht.

5. Anordnung nach einem der vorhergehenden Ansprüche, **dadurch gekennzeichnet,** daß das transparente Material aus InP besteht.

6. Anordnung nach einem der vorhergehenden Ansprüche, **dadurch gekennzeichnet,** daß der Schichtwellenleiter (1) asymmetrisch aufgebaut ist.